# EUROPEAN PATENT APPLICATION

(11) **EP 3 937 044 A1**
(43) Date of publication of application: **12.01.2022**
(21) Application number: 20315340.8
(22) Date of filing: 06.07.2020
(51) Int. Cl.: G06F 21/57, G06F 21/32, G06F 8/65

(54) **METHOD FOR MANAGING A BIOMETRIC SMART CARD**

(71) Applicant: Thales DIS France SA, 92190 Meudon (FR)
(72) Inventor: Boulanger, Nicolas, 13881 Gemenos Cedex (FR); Leloup, Laurent, 13881 Gemenos Cedex (FR); Souchon, Pierre, 13881 Gemenos Cedex (FR); Salles, Jean-Luc, 13881 Gemenos Cedex (FR)
(74) Representative: Grevin, Emmanuel

(57) **Abstract**

The invention is a method for managing a biometric smart card (10) associated to a user (50). The biometric smart card comprises a reference biometric data (21) previously enrolled by the user, a secure element (20), a biometric sensor (40) and a controller (30) coupled to the biometric sensor (40). The controller comprises a first firmware (31). The method comprises the following steps:
- the secure element receives a second firmware (32) originated from a remote server (90),
- establishing a secure channel between the secure element and the controller by using keys pre-stored in said secure element and controller,
- the secure element sends the second firmware to the controller through the secure channel, and
- the secure element applies a policy to deactivate the first firmware and activate the second firmware.

## Description

### (Field of the invention)

The present invention relates to methods for managing a biometric smart card. It relates particularly to methods of replacing a firmware in a controller which is embedded in a biometric smart card and coupled to a biometric sensor.

### (Background of the invention)

Smart cards are portable small devices comprising a memory, a microprocessor and an operating system for computing treatments. They may comprise services applications like payment applications. Such secure elements may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode.

A smart card may contain a biometric sensor like a fingerprint sensor which can contribute to the authentication of the user of the smartcard. A biometric smart card may embed a biometric reference data corresponding to the user of the smart card. Such a biometric reference data is recorded during an enrollment phase. The biometric smartcard embeds a biometric algorithm designed to compare a data captured by the biometric sensor with the biometric reference data in order to authenticate the cardholder.

Some biometric smart cards comprise a secure element (which may be a conventional smart card chip), a biometric sensor and a controller which is coupled to the biometric sensor. The controller can be distinct from secure element and may be connected to components (secure element and biometric sensor) internal to the card only.

Usually such a controller comprises a firmware which is designed to manage the connections with both the secure element and biometric sensor and to perform treatments on biometric data captured by the sensor. In order to enhance controller features or to patch a security breach, a need to modify the firmware may appear. Unfortunately, since the controller may have no direct access to the outside of the card, update of the controller firmware cannot be performed.

There is need to be able to update a firmware comprised in a controller which cannot be directly reached by a machine located outside the biometric smart card.

### (Summary of the Invention)

The invention aims at solving the above mentioned technical problem.

An object of the present invention is a method for managing a biometric smart card which is associated to a user. The biometric smart card comprises a reference biometric data previously enrolled by the user, a secure element, a biometric sensor and a controller coupled to the biometric sensor. The controller comprises a first firmware. The method comprises the steps:
- receiving, by the secure element, a second firmware originated from a remote server,
- establishing a secure channel between said secure element and controller by using keys pre-stored in said secure element and controller,
- sending the second firmware from the secure element to the controller through the secure channel,
- applying a policy, by the secure element, to deactivate said first firmware and activate said second firmware.

Advantageously, upon receipt of the second firmware, the controller may automatically install said second firmware and as soon as the second firmware is installed, the controller may automatically and permanently deactivate said first firmware and activate said second firmware.

Advantageously, the biometric sensor may collect a first captured biometric data of the user, the controller may generate a first treated biometric data from the first captured biometric data using said first firmware, the biometric sensor may collect a second captured biometric data of the user, said controller may generate a second treated biometric data from the second captured biometric data using said second firmware, the controller may provide the secure element with said first and second treated biometric data, the secure element may perform a checking to verify that both said first and second treated biometric data match the reference biometric data, the secure element may send a switch command to the controller only when said checking is successful and upon receipt of the switch command, the controller may permanently deactivate said first firmware and activate said second firmware.

Advantageously, said second captured biometric data may be the first captured biometric data.

Advantageously, the controller may identify which firmware must be applied according to a specific indicator comprised in a request received from the secure element.

Advantageously, the controller, upon receipt of a switch order from the secure element, may permanently deactivate said first firmware, permanently activate said second firmware and the secure element may permanently erase the reference biometric data.

Advantageously, the biometric smart card may be configured to work at least in an enrolment mode and in a transaction mode and the enrolment mode may be automatically activated in the biometric smart card when the secure element sent said order.

An object of the present invention is a biometric smart card allocated to a user and comprising a reference biometric data previously enrolled by said user, a secure element, a biometric sensor and a controller coupled to the biometric sensor. The controller comprises a first firmware. The biometric smart card comprises at least a processing unit and instructions which cause said biometric smart card to:
- receive, by the secure element, a second firmware originated from a remote server,
- establish a secure channel between said secure element and controller by using keys pre-stored in said secure element and controller,
- send the second firmware from the secure element to the controller through the secure channel,
- apply a policy, by the secure element, to deactivate said first firmware and activate said second firmware.

Advantageously, upon receipt of the second firmware, the controller may be configured to automatically install said second firmware and as soon as the second firmware is installed, the controller may be configured to automatically and permanently deactivate said first firmware and activate said second firmware.

Advantageously, the biometric sensor may collect a first captured biometric data of the user, said controller may generate a first treated biometric data from the first captured biometric data using said first firmware, the biometric sensor may collect a second captured biometric data of the user, said controller may generate a second treated biometric data from the second captured biometric data using said second firmware, the controller may be configured to provide the secure element with said first and second treated biometric data, the secure element may be configured to perform a checking to verify that both said first and second treated biometric data match the reference biometric data, the secure element may be configured to send a switch command to the controller only when said checking is successful and upon receipt of the switch command, the controller may be configured to permanently deactivate said first firmware and activate said second firmware.

Advantageously, the controller may be configured to identify which firmware must be applied according to a specific indicator comprised in a request received from the secure element.

Advantageously, the controller, upon receipt of a switch order from the secure element, may be configured to permanently deactivate said first firmware, to permanently activate said second firmware and the secure element may be configured to permanently erase the reference biometric data.

Advantageously, the biometric smart card may be configured to work at least in an enrolment mode and in a transaction mode and the biometric smart card may be configured to automatically activate the enrolment mode when the secure element sends said order.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows a first exemplary flow diagram for replacing the firmware of a controller embedded in a biometric smart card according to an example of the invention,
- Figure 2 shows a detail of a step of a flow diagram for replacing the firmware of a controller embedded in a biometric smart card according to another example of the invention,
- Figure 3 shows a series of sub steps detailing a step of a flow diagram for replacing the firmware of a controller embedded in a biometric smart card according to another example of the invention,
- Figure 4 shows several sub steps detailing a step of a flow diagram for replacing the firmware of a controller embedded in a biometric smart card according to another example of the invention, and
- Figure 5 shows a diagram of architecture of a biometric smart card according to an example of the invention.

### (Detailed description of the preferred embodiments)

The invention may apply to any type of biometric smart card associated to a user and intended to provide a service. The biometric smart card may be a bank smart card or an identity document for instance.

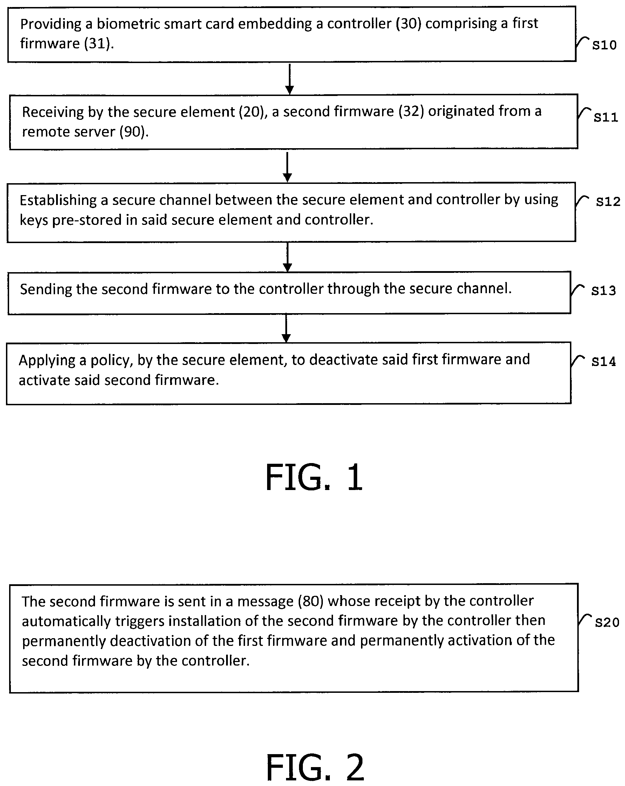

Figure 1 shows a first exemplary flow diagram for replacing the firmware of a controller embedded in a biometric smart card according to an example of the invention.

In this example, the biometric smart card is a banking card intended to be used by its associated user (i.e. bank customer) for payment or cash withdrawal.

The bank smart card 10 embeds a biometric sensor 40 designed to capture fingerprint data. The bank smart card embeds a controller coupled to the biometric sensor and configured to get data captured by the sensor and to apply treatments on the captured data. For instance, the controller may be a microcontroller unit (MCU) which is configure to perform an anti-spoofing algorithm to detect fraud attempt based on a fake fingerprint system. The bank smart card embeds a secure element 20 comprising a hardware processing unit, memory and an operating system designed to contribute to bank services. The secure element is configured to establish a communication channel with the controller. The bank smart card may comprise a reference biometric data 21 which has been enrolled by the user (i.e. bank customer).

At step S10, the biometric smart card 10 that embeds both a secure element 20 and a controller 30 comprising a first firmware 31 is provided.

At step S11, the secure element 20 receives a second firmware 32 originated from a remote server 90. Preferably, the secure element receives the second firmware through a secure channel established via a reader device connected through a communication interface 15 of the card 10. The communication interface may be of contact type or contactless type. The reader may be an ATM (Automated Teller Machine) or an on-line POS (Point-Of-Sale).

In one embodiment, the secure channel may be established between the secure element and the remote server through the reader interfacing with the communication interface 15. The secure channel may comply with GlobalPlatform Card Specification Version 2.3, Oct 2015.

At step S12, a secure channel is established between the secure element and the controller by using keys pre-stored in the secure element and the controller. Preferably, the keys are stored in the secure element and the controller during the manufacturing stage of the card 10. Preferably, the keys are symmetric, alternatively the keys may belong to a public/private pair according to PKI scheme.

At step S13, the secure element sends the second firmware to the controller through the secure channel.

At step S14, the secure element applies a policy to deactivate the first firmware and activate the second firmware. Several examples of policy are described below.

Preferably, the secure channel is automatically closed as soon as the new firmware becomes enabled in the controller.

In one embodiment, the secure element may receive several chunks over several reader connections spread over time. (i.e. through several secure sessions). When all required chunks are downloaded in the secure element, the secure element may build the second firmware 32 from the received chunks and trigger update of the firmware in the controller.

Step .S14 may include step S13 (and step S12) according the chosen policy.

Figure 2 shows a series of sub steps detailing a step of a flow diagram for replacing the firmware of a controller embedded in a biometric smart card according to another example of the invention.

The step S20 of Figure 2, is a particular embodiment of steps S13 and S14 of Figure 1.

The second firmware is assumed to be sent in a message 80 from the secure element to the controller. The message 80 may be conveyed through one or several data packets. At step S20, upon receipt of the message 80 from the secure element, the controller automatically triggers installation of the second firmware, permanently deactivation of the first firmware and permanently activation of the second firmware. The fact that the second firmware is permanently activated, means that now the controller uses the second firmware by default. In a further replacement operation, the second firmware may be updated with a third firmware version.

Installation of the second firmware, deactivation of the first firmware and activation of the second firmware are performed by the controller. Preferably, as soon as the second firmware is installed, the controller automatically and permanently deactivates the first firmware and activates the second firmware.

In the embodiment of Figure 2, the applied policy corresponds to the fact that an automatic replacement of the current firmware is triggered by the sending of the new firmware by the secure element.

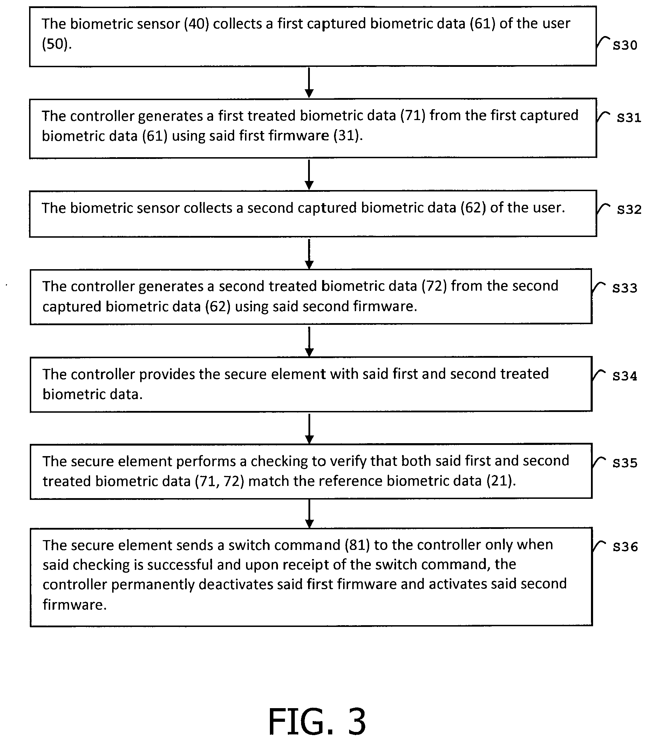

Figure 3 shows a detail of a step of a flow diagram for replacing the firmware of a controller embedded in a biometric smart card according to another example of the invention.

In this embodiment, the new firmware is assumed to be backward compatible so that the stored reference biometric data 21 (created during the enrolment phase for instance) should be used by both the previous firmware and the new firmware.

By reference to the flow diagram of Figure 1, step S14 is replaced by the sequence step S30 to step S36.

At step S30, the biometric sensor 40 collects a first captured biometric data 61 of the user 50.

At step S31, the controller generates a first treated biometric data 71 from the first captured biometric data 61 using the first firmware 31.

At step S32, the biometric sensor collects a second captured biometric data 62 of the user 50.

At step S33, the controller generates a second treated biometric data 72 from the second captured biometric data 62 using said second firmware 32.

At step S34, the controller provides the secure element with said first and second treated biometric data. This transfer can be carried out in one or more sendings of data packets.

At step S35, the secure element performs a checking to verify that both said first and second treated biometric data (71, 72) match the reference biometric data 21.

At step S36, the secure element sends a switch command 81 to the controller only if the checking of steps S35 is successful. Upon receipt of the switch command 81, the controller permanently deactivates the first firmware and activates the second firmware.

It is to be noted that some steps may be executed in other orders as a person skilled in the art may understand. For instance, step S32 may be run before step S31. Similarly, the step S34 may be performed in two times: the controller may send (to the secure element) the first treated biometric data before step S32 and sends the second treated biometric data after step S32.

In a variant, the switch command 81 may comprise a request to update settings of the biometric sensor 40. (and possibly the configuration data to apply to the biometric sensor 40.) The controller (or the new firmware) may be designed to update settings of the biometric sensor 40.

In a variant, steps S30 and S32 may be merged in a single step and the second captured biometric data 62 may be the first captured biometric data 61. In other words, the sensor captures only one biometric data which is treated by applying successively said first firmware and second firmware to generate two treated biometric data 71 and 72 from the same captured biometric data. This embodiment is convenient for the user which is supposed to present her finger only once.

In a variant, the secure element may specify which firmware the controller should use to treat the data captured by the biometric sensor.

For instance, the secure element may send a request comprising a specific indicator that specifies that the first firmware should be used. By analyzing the received request, the controller selects the first firmware and generates a first treated biometric data 71 as mentioned at step S31 of Figure 3. Similarly, upon receipt of another request (from the secure element) specifying the second firmware, the controller may select the second firmware and generate a second treated biometric data 72 as mentioned at step S33 of Figure 3.

The control of match with the old firmware allows to authenticate the card holder and the control of match with the new firmware allows to validate the backward compatibility of the enrollment.

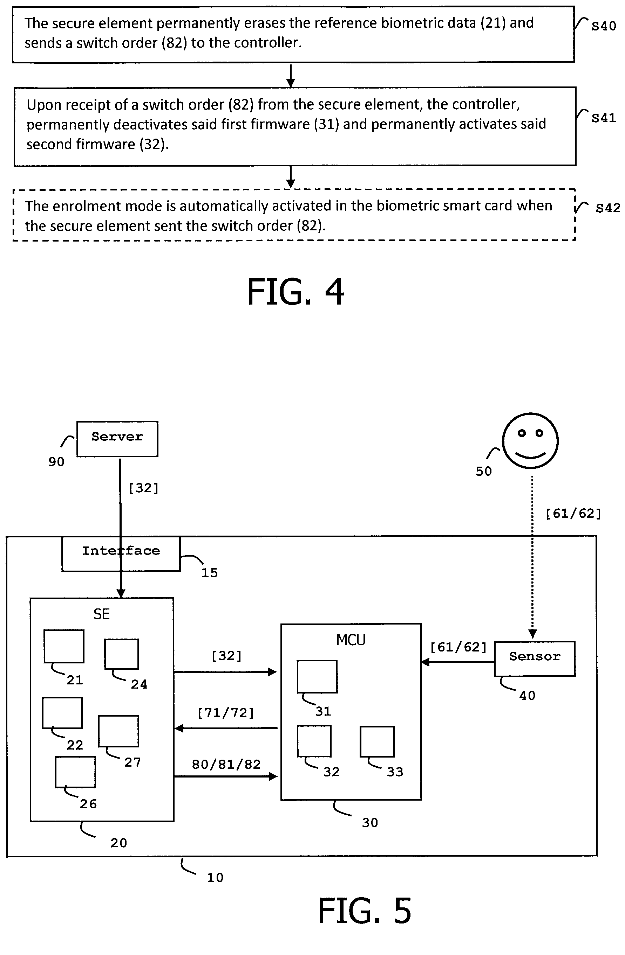

Figure 4 shows sub steps detailing a step of a flow diagram for replacing the firmware of a controller embedded in a biometric smart card according to another example of the invention.

In this embodiment, the new firmware is assumed not to be backward compatible so that the current reference biometric data 21 cannot be used by the new firmware.

In one variant, by reference to the flow diagram of Figure 1, step S14 may be replaced by steps S40 and S41.

At step S40, the secure element permanently erases the reference biometric data 21 and sends a switch order 82 to the controller.

At step S41, upon receipt of the switch order 82 from the secure element, the controller, permanently deactivates the first firmware 31 and permanently activates the second firmware 32.

In another variant, by reference to the flow diagram of Figure 1, step S14 may be replaced by steps S40 to S42.

At step S42, the enrolment mode may be automatically activated in the biometric smart card by the secure element. The activation of the enrolment mode may be triggered by the sending of the switch order 82, by the erasing of the reference biometric data 21 or by the receipt of acknowledgement of the switch order 82.

When the enrolment mode is activated on the biometric smart card, the secure element is configured to automatically create (and store) a new reference biometric data based on the next biometric data captured by the sensor. Once the new reference biometric data is created, the secure element switches to a transaction mode (the enrolment mode is deactivated) where the secure element is configured to compare the further captured biometric data with the stored reference biometric data.

Figure 5 shows diagram of architecture of a biometric smart card according to an example of the invention.

In this example, the biometric smart card 10 is a banking smart card.

The smart card 10 comprises a secure chip 20 (also called secure element), a biometric sensor 40 and a controller 30 of the sensor. The controller 30 may be a processing unit (also named processor unit) like a microcontroller unit (MCU). The biometric sensor may be a conventional biometric sensor like a fingerprint sensor.

The controller 30 is coupled to the biometric sensor 40 and able to perform biometric pre-computation process on raw biometric data captured by the biometric sensor. Preferably, the processing unit 30 is the only entity that can directly access the sensor. The controller 30 is configured to retrieve captured biometric data 61 (also named raw biometric data) from the sensor 40 and to apply some treatments to the retrieved biometric data 61.

The controller 30 comprises a first local key 33 intended to be used to establish a secure communication channel with the secure element 20. The controller 30 comprises a firmware 31 (i.e. biometric algorithm) aiming at detecting spoofing attacks on the sensor 40.

Preferably, the controller is configured to accept communication with the secure element 20 only through a secure channel.

Optionally, the firmware 31 may also be designed to extract remarkable items from the raw biometric data 61 collected by the sensor 40.

The controller 30 comprises a processor and a non-volatile memory (not shown). The non-volatile memory stores the firmware 31 which includes software instructions that are executed by the processor to perform the features of the controller.

In the example of Figure 5, the secure element 20 is a conventional smart card chip with additional features. The secure element 20 is able to contribute to a banking transaction with an external machine. For instance, the transaction may be a payment transaction or cash withdrawal. The secure element 20 comprises a reference biometric data 21 previously enrolled by the user 50.

In one embodiment, the secure element 20 may comprise an extracting engine 22 for extracting remarkable items from the biometric data 61 collected by the sensor 40.

The secure element 20 comprises a biometric algorithm 26 aiming at comparing the reference biometric data 21 with remarkable items extracted from the biometric data 61 collected by the sensor 40. The secure element 20 comprises an operating system (not shown).

The secure element 20 comprises a second local key 24 intended to be used to establish a secure communication channel with the controller 30. The first and second local keys are paired.

In the example of Figure 5, the secure element 20 can access the sensor 40 through the controller 30 only.

The smart card 10 comprises a communication interface 15 which may be designed to exchange data with outside in contact mode, in contactless mode or both modes. The communication interface 15 is linked to the secure element 20. The smart card is devoid of direct link between the controller 30 and the communication interface 15.

The secure element 20 comprises a processor and a non-volatile memory (not shown). In one embodiment, the non-volatile memory stores software instructions which are executed by the processor to perform the functions of the secure element. In one embodiment, the functions of the secure element 20 may be implemented as pure hardware solution or a combination of firmware and hardware.

In a one embodiment, the secure element 20 may comply with Specifications from EMV^{®} Contactless Specifications for Payment Systems Version 2.6 or Version 3.0.

In a one embodiment, the secure element 20 may comply with Visa^{®} Integrated Circuit Card Specification (VIS) Version 1.6 and Visa^{®} Contactless Payment Specification (VCPS) Version 2.2.

In a one embodiment, the secure element 20 may comply with M/Chip Advance Card Application Specification Version 1.2.2 or Version 1.2.3.

The controller 30 and the secure element 20 may communicate through I2C (Inter-Integrated Circuit), through SPI (Serial Peripheral Interface), through SWP (Single Wire Protocol) or any relevant protocol.

It is to be noted that the controller 30 and the secure element 20 are separated hardware components.

The secure element 20 comprises an agent 27 configured to apply a preset policy in order to trigger the replacement of the current firmware of the controller by a new firmware received through the communication interface 15.

In one embodiment, the agent 27 may be configured to trigger the firmware replacement by sending to the controller a message 80 comprising the second firmware. The controller may be configured to automatically install (i.e. store into its own memory) the received second firmware upon receipt of the message 80. The controller may be configured to automatically and permanently deactivate the first firmware and activate the second firmware as soon as the second firmware is installed.

In one embodiment, the agent 27 may be configured to request the controller to generate two treated biometric data 71 and 72 from one or more captured biometric data, to perform a checking to verify that both the two treated biometric data (71, 72) match the reference biometric data 21 and to trigger the firmware replacement by sending to the controller a switch command 81 only when the checking operation is successful.

In one embodiment, the agent 27 may be configured to send a request comprising a specific indicator which specifies the reference of the firmware that must be used to generate a treated biometric data. The controller may be configured to identify which firmware must be applied according to the specific indicator comprised in the request received from the secure element.

In one embodiment, the agent 27 may be configured to send a switch order 82 to the controller and to permanently erase the reference biometric data 21. Preferably, these two actions are performed in atomic manner, so that either both are performed or none of them. The controller may be configured to permanently deactivate said firmware, to permanently activate the second firmware upon receipt of the switch order 82.

In one embodiment, the biometric smart card may be configured to work at least in an enrolment mode and in a transaction mode. The agent 27 may be configured to automatically activate the enrolment mode when the secure element sends the switch order 82 or erases the reference biometric data 21. The agent 27 may be configured to automatically activate the transaction mode (and deactivate the enrolment mode) as soon as a new reference biometric data is created.

Thanks to the invention, it is possible to securely update the current firmware of the controller coupled to a biometric sensor in a biometric smart card.

The firmware replacement can correspond to the complete change of the firmware or to the change of a part of the firmware.

Some embodiments of the invention ensure that the newly activated firmware will correctly run in the controller.

The invention is not limited to the described embodiments or examples. In particular, the described examples and embodiments may be combined.

The invention is not limited to Banking smart cards and applies to any biometric smart cards allocated to a user.

The biometric smart card may embeds several biometric sensors (of same or different types) and several associated controllers. The invention may allow to replace firmware of any number of controllers embedded in the biometric smartcard.

Although examples of the invention has been provided in the banking domain, the invention also applies to other domains. For example, the smart card may provide access to a physical building, room or area.

Although examples of the invention has been provided for a fingerprint sensor, it may apply to devices embedding any biometric sensor targeting various types of data: iris, voice, face, blood or palm print for examples.

It is to be noted that the invention applies to any biometric smart cards or similar devices able to be coupled to a hardware machine in contact or contactless mode.

## Claims

1. A method for managing a biometric smart card (10) associated to a user (50), said biometric smart card comprising a reference biometric data (21) previously enrolled by said user, a secure element (20), a biometric sensor (40) and a controller (30) coupled to the biometric sensor (40), said controller comprising a first firmware (31),
**characterized in that** the method comprises the steps:
- receiving, by the secure element, a second firmware (32) originated from a remote server (90),
- establishing a secure channel between said secure element and controller by using keys pre-stored in said secure element and controller,
- sending the second firmware to the controller through the secure channel,
- applying a policy, by the secure element, to deactivate said first firmware and activate said second firmware.

2. The method according to claim 1, wherein upon receipt of the second firmware, the controller automatically installs said second firmware and wherein as soon as the second firmware is installed, the controller automatically and permanently deactivates said first firmware and activates said second firmware.

3. The method according to claim 1, wherein the biometric sensor collects a first captured biometric data (61) of the user, wherein said controller generates a first treated biometric data (71) from the first captured biometric data (61) using said first firmware, wherein the biometric sensor collects a second captured biometric data (62) of the user, wherein said controller generates a second treated biometric data (72) from the second captured biometric data (62) using said second firmware, wherein the controller provides the secure element with said first and second treated biometric data (71, 72), wherein the secure element performs a checking to verify that both said first and second treated biometric data (71, 72) match the reference biometric data (21), wherein the secure element sends a switch command (81) to the controller only when said checking is successful and wherein upon receipt of the switch command, the controller permanently deactivates said first firmware and activates said second firmware.

4. The method according to claim 3, wherein said second captured biometric data (62) is the first captured biometric data (61).

5. The method according to claim 3, wherein the controller identifies which firmware must be applied according to a specific indicator comprised in a request, received from the secure element.

6. The method according to claim 1, wherein the controller, upon receipt of a switch order (82) from the secure element, permanently deactivates said first firmware, permanently activates said second firmware and wherein the secure element permanently erases the reference biometric data (21).

7. The method according to claim 6, wherein the biometric smart card is configured to work at least in an enrolment mode and in a transaction mode and wherein the enrolment mode is automatically activated in the biometric smart card when the secure element sent said order.

8. A biometric smart card (10) allocated to a user (50) and comprising a reference biometric data (21) previously enrolled by said user, a secure element (20), a biometric sensor (40) and a controller (30) coupled to the biometric sensor (40), said controller comprising a first firmware (31),
**characterized in that** said biometric smart card comprises at least a processing unit and instructions which cause said biometric smart card to:
- receive, by the secure element, a second firmware (32) originated from a remote server (90),
- establish a secure channel between said secure element and controller by using keys pre-stored in said secure element and controller,
- send the second firmware to the controller through the secure channel,
- apply a policy, by the secure element, to deactivate said first firmware and activate said second firmware.

9. The biometric smart card according to claim 8, wherein upon receipt of the second firmware, the controller is configured to automatically install said second firmware and wherein as soon as the second firmware is installed, the controller is configured to automatically and permanently deactivate said first firmware and activate said second firmware.

10. The biometric smart card according to claim 8, wherein the biometric sensor collects a first captured biometric data (61) of the user and said controller generates a first treated biometric data (71) from the first captured biometric data (61) using said first firmware, wherein the biometric sensor collects a second captured biometric data (62) of the user and said controller generates a second treated biometric data (72) from the second captured biometric data (62) using said second firmware, wherein the controller is configured to provide the secure element with said first and second treated biometric data (71, 72), wherein the secure element is configured to perform a checking to verify that both said first and second treated biometric data (71, 72) match the reference biometric data (21), wherein the secure element is configured to send a switch command (81) to the controller only when said checking is successful and wherein upon receipt of the switch command, the controller is configured to permanently deactivate said first firmware and activate said second firmware.

11. The biometric smart card according to claim 10, wherein said second captured biometric data (62) is the first captured biometric data (61).

12. The biometric smart card according to claim 10, wherein the controller is configured to identify which firmware must be applied according to a specific indicator comprised in a request received from the secure element.

13. The biometric smart card according to claim 8, wherein the controller, upon receipt of a switch order (82) from the secure element, is configured to permanently deactivate said first firmware, to permanently activate said second firmware and wherein the secure element is configured to permanently erase the reference biometric data (21).

14. The biometric smart card according to claim 13, wherein the biometric smart card is configured to work at least in an enrolment mode and in a transaction mode and wherein the biometric smart card is configured to automatically activate the enrolment mode when the secure element sent said order.
